# EUROPEAN PATENT APPLICATION

(11) **EP 2 410 025 A1**
(43) Date of publication of application: **25.01.2012**
(21) Application number: 11185783.5
(22) Date of filing: 24.04.2007
(51) Int. Cl.: C09D 7/12, C08K 3/34

(54) **Barrier compositions**

(30) Priority: 24.04.2006 GB 0608126
(62) Divisional of application: 07732543.9
(71) Applicant: Imerys Minerals Limited, Par Cornwall PL24 2SQ (GB)
(72) Inventor: The designation of the inventor has not yet been filed
(74) Representative: Rushton, David John

(57) **Abstract**

Barrier compositions comprising high shape factor surface treated kaolins are described.

## Description

### Field of the Invention

This invention relates to mineral filled compositions which exhibit barrier properties, particularly oxygen barrier properties, and uses thereof, such as in packaging. In particular, the present invention relates to barrier compositions in the form of barrier coatings which are suitable for use in coating paper and for coating polymers. The present invention also relates to barrier compositions in the form of mineral filled polymer compositions which may be formed into articles, such as films for packaging. These polymer compositions may themselves be used as coating layers.

### Background of the Invention

It is known to exploit the properties of certain materials in order to improve the barrier properties of packaging materials. For example, it is known to use oxygen scavengers in packaging structures which will react with oxygen that is trapped in the package or permeates into the package. Barrier properties are also important in reducing the penetration of moisture, oil, grease, aromas and, in some cases, bacteria.

Barrier compositions, for example, in the form of polymer films, are useful in a number of industries where it is required to protect a product from the effects of oxygen in the air. Such compositions preferably possess low oxygen transmission rates (OTR) at varying levels of humidity. Such films are useful in the production of containers such as bags and liners for providing enhanced shelf-life packing of oxygen sensitive products such as food and beverages, as well as pharmaceutical and health care products. Barrier compositions, for example in the form of barrier coatings, are useful to impart to paper, resistance to moisture, moisture vapour, grease, oil, air. Barrier compositions may also be used in combination with polymers, including rubbers, in order to prevent gas escaping, for example, such as air from tyres.

Often, the incorporation of materials in packaging compositions and the like may give rise to acceptable barrier properties but result in other attributes of the composition being significantly compromised, such as the long term stability or lifetime. There is a need for compositions which provide acceptable and/or improved barrier properties but which also retain acceptable stability or lifetime, preferably in combination with other acceptable mechanical properties.

The present invention is based on a number of findings, including the finding that barrier compositions comprising surface treated high shape factor hydrous kaolins possess useful oxygen barrier characteristics and exhibit acceptable stability.

### Summary of the Invention

The present invention describes the use of surface treated high shape factor hydrous kaolins in barrier compositions and the use of said compositions in a range of applications which exploit the rate at which one or more of oxygen, moisture, grease, aromas are transmitted through said compositions. The oxygen may be present in the absence of other gases, or in combination with other gases such as when present in air. As such, and according to a first aspect of the present invention, a barrier composition comprising a surface treated high shape factor hydrous kaolin is provided wherein said kaolin decreases the oxygen transmission rate (OTR) of the barrier composition compared to the barrier composition in the absence of said kaolin and, according to a second aspect of the present invention, the use of a surface treated high shape factor hydrous kaolin in a barrier composition for decreasing the oxygen transmission rate of said composition when compared to the composition in the absence of the surface treated high shape factor hydrous kaolin, is provided.

The barrier composition may be in a form suitable for use in a range of applications, including: as a barrier coating for substrates such as paper products, or polymers; as a polymer composition, which may subsequently be formed into an article such as a film, or may itself be used for coating substrates such as polymers.

According to a third aspect of the present invention, a polymer article formed or formable from a barrier composition according to the first aspect of the present invention, which is in the form of a polymer composition, is provided. The polymer article may be in form which is suitable for packaging, such as a polymer film. Suitable packaged products include those which may exhibit a degree of oxygen sensitivity over either short or extended periods of time.

Suitable polymer articles include packaging materials in general, for example, which are suitable for use in one or more of the construction, pharmaceutical or food packaging industries, such as films.

According to a fourth aspect of the present invention, there is provided a production process for the composition according to the first aspect of the present invention and wherein the composition is a polymer composition, comprising blending the polymer with a surface treated high shape factor hydrous kaolin and optional additional ingredients.

According to a fifth aspect of the present invention, there is provided a production process for the composition according to the first aspect of the present invention and wherein the composition is a paper barrier coating, comprising combining the surface treated high shape factor hydrous kaolin with suitable paper barrier coating ingredients.

The coating composition according to the present invention may be used to coat a range of substrates including paper products, polymers and as such, according to a sixth aspect of the present invention, a substrate coated with the composition according to the first aspect of the present invention is provided.

The term paper products should be understood to mean all forms of paper, including board, card, paperboard, and the like.

According to a seventh aspect of the present invention, the use of a composition according to the first aspect of the present invention in protecting a product from the effects of one or more of oxygen, moisture, grease, aromas and/or decreasing the rate at which one or more of oxygen, moisture, grease, aromas escapes from a particular environment is provided.

According to an eighth aspect of the present invention, a method of protecting a product from oxygen comprises covering said product with an article according to the third aspect of the present invention or a coated substrate according to the sixth aspect of the present invention. The product will be sufficiently covered so that the effects of oxygen are slowed down or ameliorated when compared to the use of the barrier composition in the absence of the surface treated high shape factor hydrous kaolin. In most cases, the product will be completely covered or packaged.

According to a ninth aspect of the present invention, a packaged product is provided wherein the packaging is a coated substrate or a polymer article according to previous aspects of the present invention.

Typical products which may be protected from the effects of one or more of oxygen, moisture, oil, grease, aromas include perishable goods, foods and beverages, health care products, electrical goods, electronic components, pharmaceuticals. Typical environments from which it may be desired to decrease, minimise or prevent the escape of gases, including oxygen, include rubber tyres, pipes (e.g. fuel lines).

The shape factor of the surface treated kaolin may suitably be equal to or greater than 20. For example, the shape factor may be equal or greater than 25, or equal or greater than 30, or equal or greater than 35, or equal or greater than 40 or 50. The shape factor may be equal or greater than 90, for example up to 110 or 150. For example, the shape factor may lie in one or more of the following ranges: 20 to 150; 20 to 110; 25 to 150; 25 to 110; 30 to 150; 30 to 110; 35 to 150; 35 to 110; 40 to 150; 40 to 110; 50 to 150; 55 to 110; 90 to 150; 90 to 110.

The use of the surface treated high shape factor hydrous kaolin according to the various aspects of the present invention may result in a decrease in the OTR when compared to the composition not comprising the surface treated high shape factor hydrous kaolin, for example by at least 1%, for example, by at least 5%, preferably at least 10%, or at least 20% and even more preferably at least 30%. For example, the use of the surface treated high shape factor hydrous kaolin according to the various aspects of the present invention may result in a decrease in the OTR when compared to the composition not comprising the surface treated high shape factor hydrous kaolin in the range of about 5% to 40%. Such decreases in the OTR may be achieved at a loading of the surface treated high shape factor hydrous kaolin in the composition of at least 3wt%, or at least 5wt%, or at least 10wt% or at least 20wt%. For example, the loading of the surface treated high shape factor hydrous kaolin in the composition in order to achieve these decreases in OTR may lie in the range of 5wt% to 30wt%, for example 5wt% to 20wt%.

Surface treating the high shape factor kaolins preferably gives rise to an increase in long term thermal stability. For example, when compared to the untreated kaolins, the compositions comprising the surface treated kaolins may exhibit a long term thermal stability which is about three to twenty times greater, for example five to fifteen times greater.

The barrier compositions of the present invention preferably possess an oxygen transmission rate (OTR) of not greater than about 300 cm³µm/m²/day, and preferably not greater than about 100 cm³µm/m²/day, for example not greater than about 30 cm³ µm/m²/day or 2 cm³ µm/m²/day. The barrier compositions of the present invention may possess an oxygen transmission rate (OTR) of about 0.01 cm³ µm/m²/day to 300 cm³µm/m²/day, for example, about 2cm³µm/m²/day to about 100cm³ µm/m²/day. The test measurements for OTR used in the present invention are normalised to take account of the thickness of the sample and are carried out in accordance with ASTM D3985. This is described in more detail in the Test Method section (oxygen permeability) of the description.

The compositions according to the present invention may comprise additional minerals other than hydrous kaolins such as one or more talcs, calcium carbonate (including ground calcium carbonate, GCC and precipitated calcium carbonate, PCC), feldspar, montmorillonites. These further minerals may be blended with the surface treated high shape factor kaolin in appropriate amounts. For example, the amount of montmorillonite blended may be up to about 30wt% or up to about 25wt% of the total weight of blended minerals.

### Detailed Description of the Invention

### The high shape factor kaolin

A kaolin product of high shape factor is considered to be more "platey" than a kaolin product of low shape factor. "Shape factor" as used herein is a measure of an average value (on a weight average basis) of the ratio of mean particle diameter to particle thickness for a population of particles of varying size and shape as measured using the electrical conductivity method and apparatus described in GB-A-2240398/US-A-5128606/EP-A-0528078, US 5576617/EP 631665 and using the equations derived in these patent specifications. In the measurement method described in EP-A-0528078, the electrical conductivity of a fully dispersed aqueous suspension of the particles under test is caused to flow through an elongated tube. Measurements of the electrical conductivity are taken between (a) a pair of electrodes separated from one another along the longitudinal axis of the tube, and (b) a pair of electrodes separated from one another across the transverse width of the tube, and by using the difference between the two conductivity measurements, the shape factor of the particulate material under test is determined.

Unless otherwise stated, the mean (average) equivalent particle diameter (d₅₀ value) and other particle size properties referred to herein for the hydrous kaolin are as measured in a well known manner by sedimentation of the particulate material in a fully dispersed condition in an aqueous medium using a Sedigraph 5100 machine as supplied by Micromeritics Instruments Corporation, Norcross, Georgia, USA (telephone: +1 770 662 3620; web-site: www.micromeritics.com), referred to herein as a "Micromeritics Sedigraph 5100 unit". Such a machine provides measurements and a plot of the cumulative percentage by weight of particles having a size, referred to in the art as the 'equivalent spherical diameter' (esd), less than given esd values. The mean particle size d₅₀ is the value determined in this way of the particle esd at which there are 50% by weight of the particles which have an equivalent spherical diameter less than that d₅₀ value. The hydrous kaolin may have a mean equivalent particle diameter (d₅₀) less than or equal to about 2 microns (µm) (by Sedigraph), e.g. less than 1.5 µm, particularly less than 1 µm, e.g. less than about 0.5 µm, e.g. less than about 0.3 µm. The value of d₅₀ may, for example, be in the range of about 0.3 µm to about 2 µm, for example about 1 µm to about 2 µm.

The range of fine content of hydrous kaolin, i.e. the wt% less than 0.25µm may lie in the range 5wt% to 95wt%, for example 40wt% to 90wt% or 5wt% to 20wt%.

The hydrous kaolin for use in preparing the surface-modified material according to the present invention may be prepared by light comminution, e.g. grinding or milling, of a coarse kaolin to give suitable delamination thereof. The comminution may be carried out by use of beads or granules of a plastic, e.g. nylon, grinding or milling aid. Ceramic media, silica or sand may also be used. In order to improve the dispersion of the kaolin in, for example, polymers, jet-milling or fluid energy milling may be used; see US 6145765 and US 3932194, the contents of which are incorporated herein in their entirety, for more details. The coarse kaolin may be refined to remove impurities and improve physical properties using well-known procedures. The kaolin may be treated by a known particle size classification procedure, e.g. screening and/or centrifuging, to obtain particles having a desired d₅₀ value.

### Surface treatment

The hydrous kaolin is surface treated with one or more compounds which may be selected from organic and/or inorganic compounds. These compounds may be referred to herein as surface treatment agents. The surface treatment generally seeks to neutralise and/or reduce the activity of acid sites on the surface of the kaolin, thereby stabilising and preferably increasing the effective lifetime of the barrier compositions in which the hydrous kaolins are incorporated. The neutralisation of the acid sites results in a so-called passivation of the kaolin and in certain circumstances, increased hydrophobicity. In order to achieve satisfactory passivation then the pKa of the kaolin, which is in effect a measure of the surface acidity of the kaolin, should preferably be above about -7.0, e.g. above about -3.0, e.g. above about 0, e.g. above about 1.5, e.g. above about 3.3. Acidic sites on the kaolin may be quantified using colorometric indicators according to Solomon et al in Clays and Clay Minerals 1972, 20, 135 and neutralised to appropriate levels; for example see Hammett et al in J. Am. Chem. Soc. 1932, 54, 2721.

The term "surface-treatment" used herein is to be understood broadly, and is not limited, for example, to uniform coatings or to coatings which cover the entire surface area of a particle. Particles in which discrete regions of the surface are modified with a surface treatment agent, and in which areas of the surface are associated with discrete molecules of the surface treatment agent, will be understood as being surface-modified within the terms of the present invention. The compound may suitably be present in an amount sufficient to reduce the activity of and/or passivate surface acid sites of the hydrous kaolin. For example, between about 0.1 and about 10 wt% based on the weight of the coated particulate kaolin material, more preferably between about 0.1 and about 3 wt%, for example between about 0.5 or 0.6 or 0.7 and about 2.0wt% e.g. about 1.5 wt%. To a certain extent, this will depend on the surface area of the kaolin sample but, typically, the coating level (in mg) of surface treatment agent per surface area (in m²) of dry kaolin clay may lie in the range from about 0.05mg m⁻² to about 8mg m⁻², for example about 0.08mg m⁻² to about 6mg m⁻², preferably about 0.1mg m⁻² to 2 mg m⁻². The particles of the kaolin usable in the present invention preferably have a specific surface area (as measured by the BET liquid nitrogen absorption method ISO 5794/1) of at least about 5m²g⁻¹, e.g. at least about 15m²g⁻¹, at least about 20mg²g⁻¹ or at least about 25m²g⁻¹, and generally about 10-40m²g⁻¹.

The surface treatment agent may be polymeric or non-polymeric. The surface treatment agent may optionally include at least one functional group, more particularly at least one functional group which can interact with a polymer or other material to be filled using the high shape factor hydrous kaolin.

### Organic compounds

When the surface treatment comprises the use of one or more organic compounds, then the one or more organic compounds may suitably comprise an organic portion and a basic portion. The organic portion of the compound may suitably comprise (or more preferably may consist essentially of) a straight or branched chain alkyl group having at least 3 carbon atoms, for example between 8 and 24 carbon atoms, such as, for example, a C₁₃, C₁₄, C₁₅, C₁₆, C₁₇, C₁₈, C₁₉, C₂₀, C₂₁, C₂₂ or C₂₃ alkyl group. Alternatively, the organic portion may comprise (or more preferably consist essentially of) one or more cyclic organic groups, which may be saturated, unsaturated or aromatic, and may optionally include one or more heteroatoms, for example selected from O, N, S and Si. The cyclic organic group may, for example, include at least one six-membered ring. The organic portion of the compound may include one or more substituent groups, such as, for example, functional groups which can favourably interact with a polymeric or other material to be filled using the surface-modified kaolin particles. The interaction may, for example, involve covalent bonding, cross-linking, hydrogen bonding, chain entanglement or ionic interaction. Suitable functional substituent groups include, for example, polar or non-polar groups, and hydrophobic or hydrophilic groups. Examples of such groups include amide or polyamide groups (which can favourably interact with polyamides such as nylon), carboxyl groups, vinyl groups (which can favourably interact with natural or synthetic rubbers), mercapto or other sulphur-containing groups (which can favourably interact with natural or synthetic rubbers), or alkylamino groups such as ethylamino or propylamino groups. The organic compound may be monomeric or polymeric. The term "polymeric" includes homopolymers and copolymers. The organic compound may be selected from one or more saturated or unsaturated C₃-C₂₄ fatty acids, for example C₈-C₂₄, in particular stearic acid (C₁₈) or behenic acid (C₂₂).

The basic portion of the compound comprises any group which is capable of associating with the acid sites of the hydrous kaolin particles. The basic portion may, for example, include at least one primary, secondary or tertiary amine group. The basic portion of the organic compound preferably comprises one or more primary amine group NH₂.

The organic compound may, for example, be selected from alkyl mono-amines containing between 8 and 24 carbon atoms in a straight or branched alkyl portion (e.g. hydrogenated-tallowalkyl-amine), organic polyamines, and cyclic mono- or poly-amines including at least one cyclic ring system having at least 6 atoms comprising the ring (e.g. melamine). These compounds may optionally carry further functional substituents on the organic portion, as described above. A preferred type of organic compounds are amino alcohols, in particular 2-amino-2-methyl-1-propanol. A suitable commercially available amino alcohol is AMP-95® which is a formulation of 2-amino-2-methyl-1-propanol containing 5% water.

Suitable organic amine compounds for use as surface treatment agents may, for example, be described by the following Formula I:

R-NR₁R₂ (I)

wherein R may be selected from C₈-C₂₄ straight or branched chain alkyl groups and R₁ and R₂ may, independently of one another be selected from H, C₈-C₂₄ straight or branched chain alkyl groups. Preferably, at least one of R₁ and R₂ is selected from H.

### Inorganic compounds

When the surface treatment comprises the use of one or more inorganic compounds, then the one or more inorganic compounds may suitably include silicon containing compounds such as silanes, amino silanes and silicates. Suitable aminosilanes, include, for example, trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine, and the like. Other possible inorganics include inorganic dispersants such as phosphates, for example sodium hexametaphosphate, tetrasodium pyrophosphate, sulphate based compounds such as alum.

The surface treated hydrous kaolin may be obtained by contacting a particulate kaolin having the desired shape factor with the one or more surface treatment agents under conditions whereby the surface treatment agent will associate with the surface of the kaolin particles. The compound may suitably be intimately admixed with the particles of the kaolin to obtain optimum contact between the materials. Both wet and dry conditions may be used, and, as such the surface treatment agent may be used in the form of solid particles (e.g. prills) or may be entrained in a suitable solvent for the coating process. The coating process may suitably be carried out at an elevated temperature.

### Secondary treatment

In addition to being surface treated with a surface treatment agent, the hydrous kaolin clay may be subjected to secondary treatment. Secondary treatment may comprise the use of one or more of the treatment agents described in relation to surface treatment. The use of one or more of the inorganic compounds is preferred in this respect; in particular the use of compounds possessing a hydrophobic portion such as the silanes and/or aminosilanes. Other secondary treatment agents (which may be referred to herein as secondary passivants) include one or more of the following: antioxidants such as phenol based antioxidants; resins such as low or medium weight epoxy resins; dispersants such as kaolin dispersants; polymers such as polyacrylates which have been hydrophobically modified; copolymers such as ethylene copolymers of polacrylic acid, lubricants such as polyethylene waxes and silicone oils.

### Uses of the barrier compositions

The barrier compositions of the present invention may be used as barrier coatings. Barrier coatings are coatings or finishes that are applied to a substrate to lessen or prevent penetration of various fluids and/or gases from one side of the substrate to the other. One reason for applying barrier coatings is either to protect a product under the substrate from substances which will alter the product's properties, for example in the case of foodstuffs, taste, or to prevent material under the substrate from migrating through the substrate and, in some cases, altering the outside of the substrate, for example the graphics on the outside of packaging. In general, barrier coatings are used on both natural fibre and synthetic fibre substrates. Substrates can be either high-density or low-density materials. Examples include paper, textiles, carpet, and various polymers, including plastics.

In the papermaking process, barrier coatings are generally useful in imparting to paper, moisture resistance, moisture vapour resistance and resistance to grease, oil, air and the like. When making barrier coatings, the amount of binder in the formulation may be of the order of 40wt% to 50wt% based on the total weight of the formulation. Typically, the barrier coating for use in papermaking processes comprises a slurry which comprises the surface treated hydrous kaolin. The solids content of the slurry ranges from about 45wt% to about 70wt% based on the total weight of the slurry.

Barrier coatings for use in coating paper typically comprise a mineral and a binder. A conventionally recognized binder may be used in the present invention. Exemplary binders include, but are not limited to, adhesives derived from natural starch obtained from a known plant source, for example, wheat, maize, potato or tapioca; synthetic binders, including styrene butadiene, acrylic latex, vinyl acetate latex, or styrene acrylic; casein; polyvinyl alcohol; polyvinyl acetate; or mixtures thereof. Barrier coatings according to the present invention may optionally include other additives, including, but not limited to, dispersants, cross linkers, water retention aids, viscosity modifiers or thickeners, lubricity or calendering aids, antifoamers/defoamers, gloss-ink hold-out additives, dry or wet rub improvement or abrasion resistance additives, dry or wet pick improvement additives, optical brightening agents or fluorescent whitening agents, dyes, biocides, levelling or evening aids, grease or oil resistance additives, water resistance additives and/or insolubilisers.

Methods of coating paper and other sheet materials, and apparatus for performing those methods, are widely published and well known. Such known methods and apparatus may conveniently be used for preparing coated paper. For example, there is a review of such methods published in Pulp and Paper International, May 1994, page 18 et seq. Sheets may be coated on the sheet forming machine, i.e., "on-machine," or "off-machine" on a coater or coating machine. Use of high solids compositions is desirable in the coating method because it leaves less water to evaporate subsequently. However, as is well known in the art, the solids level should not be so high that high viscosity and leveling problems are introduced. The methods of coating may be performed using apparatus comprising (i) an application for applying the barrier coating composition to the material to be coated; and (ii) a metering device for ensuring that a correct level of coating composition is applied. When an excess of coating composition is applied to the applicator, the metering device is downstream of it. Alternatively, the correct amount of coating composition may be applied to the applicator by the metering device, e.g., as a film press. At the points of coating application and metering, the paper web support ranges from a backing roll, e.g., via one or two applicators, to nothing (i.e., just tension). The time the coating is in contact with the paper before the excess is finally removed is the dwell time - and this may be short, long or variable.

The coating is usually added by a coating head at a coating station. According to the quality desired, paper grades are uncoated, single coated, double coated and even triple coated. When providing more than one coat, the initial coat (precoat) may have a cheaper formulation and optionally less pigment in the coating composition. A coater that is applying a double coating, i.e. a coating on each side of the paper, will have two or four coating heads, depending on the number of sides coated by each head. Most coating heads coat only one side at a time, but some roll coaters (e.g., film press, gate roll, size press) coat both sides in one pass. Examples of known coaters which may be employed include, without limitation, air knife coaters, blade coaters, rod coaters, bar coaters, multi-head coaters, roll coaters, roll/blade coaters, cast coaters, laboratory coaters, gravure coaters, kisscoaters, liquid application systems, reverse roll coaters, curtain coaters, spray coaters and extrusion coaters.

Water may be added to the solids comprising the barrier coating composition to give a concentration of solids which is preferably such that, when the composition is coated onto a sheet to a desired target coating weight, the composition has a rheology which is suitable to enable the composition to be coated with a pressure (e.g. a blade pressure) of between 1 and 1.5 bar.

The polymer to be filled or coated in accordance with the present invention comprises any natural or synthetic polymer or mixture thereof. The polymer may, for example, be thermoplastic or thermoset. The term "polymer" used herein includes homopolymers and copolymers, as well as crosslinked and/or entangled polymers and elastomers such as natural or synthetic rubbers and mixtures thereof. Specific examples of suitable polymers include, but are not limited to, polyolefins of any density such as polyethylene and polypropylene, polycarbonate, polystyrene, polyester, acrylonitrile-butadiene-styrene copolymer, nylons, polyurethane, ethylene-vinylacetate polymers, ethylene vinyl alcohol, polyvinylidene chloride, polyethylene terephthalate and any mixture thereof, whether cross-linked or un-cross-linked.

Thermoplastic polymers are suitable for use in the production of polymer films. Examples include polyolefins, such as polyethylene, polypropylene and cyclic olefin copolymers. Low density polyethylene (LDPE) may, for example, be formed using high temperature and high pressure polymerisation conditions. The density is low because these polymerisation conditions give rise to the formation of many branches, which are often quite long and prevent the molecules from packing close together to form crystal structures. Hence LDPE has low crystallinity (typically below 40%) and the structure is predominantly amorphous. The density of LDPE is taken to be in the range of about 0.910 to 0.925g/cm³. Other suitable types of polyeythlene include High Density Polyethylene (HDPE), Linear Low Density Polyethylene (LLDPE) and Ultralow Density Polyethylene (ULDPE). Generally, the densities of these materials is taken to fall within the following ranges: HDPE - 0.935 to 0.960g/cm³; LLDPE - 0.918 to 0.940g/cm³; and ULDPE - 0.880 to 0.915g/cm³.

The term "precursor" as applied to the polymer component will be readily understood by one of ordinary skill in the art. For example, suitable precursors may include one or more of: monomers, cross-linking agents, curing systems comprising cross-linking agents and promoters, or any combination thereof. Where, according to the invention the hydrous kaolin material is mixed with precursors of the polymer, the polymer composition will subsequently be formed by curing and/or polymerising the precursor components to form the desired polymer.

The high shape factor surface treated kaolin may be incorporated into a rubber composition. The kaolin may, for example, be used as a filler or an extender in the rubber composition. In addition to providing barrier characteristics, the composition comprising the surface treated kaolin can provide the benefits of resin extension, reinforcement and increased hardness of the rubber composition. The rubber product disclosed herein comprises at least one rubber chosen from natural rubbers and synthetic rubbers. For example, sulphur-vulcanisable rubbers, which can be used for the manufacture of tyre treads. Examples of synthetic rubbers, which may be used in the present invention, include, but are not limited to, styrene-butadiene rubber (SBR), vinyl-styrene-butadiene rubber (VSBR), butadiene rubber (BR), and neoprene rubber or polyisoprene. The SBR may be emulsion SBR (E-SBR) or solution SBR (S-SBR). The VSBR may be solution VSBR (S-VSBR). Examples of the BR include cis-1,3-polybutadiene rubber and cis-1,4-polybutadiene rubber. An example of the natural rubbers, with which the surface treated kaolins can be used is Standard Malaysian natural rubber. The rubber products may further comprise at least one additive chosen from conventional additives used in the art, for example, extender oils and mineral and synthetic fillers. The rubber can include an amount of the surface treated kaolin to about 35% by weight as formulated.

The surface treated hydrous kaolin when incorporated in polymer compositions is typically present at a concentration of about 3 to 70 wt% by weight of the final polymer composition, for example, about 3 to 10 wt%, for example, about 10 to 30 wt%, for example about 40 to 70 wt%. The polymer composition comprises at least one polymer, which may be referred to as a polymer resin. The term resin means a polymeric material, either solid or liquid, prior to shaping into a plastic article such as a polymer film.

In the case of thermoplastic polymers, the polymer resin is melted (or otherwise softened) prior to formation of the final article, for example a film, and the polymer will not normally be subjected to any further chemical transformations. After formation of the final article, the polymer resin is cooled and allowed to harden.

The thermoplastic polymer composition may be made by methods which are well known in the art generally. The hydrous kaolin and surface treatment agent are normally combined prior to mixing with the polymer. Similarly, certain ingredients can, if desired, be pre-mixed before addition to the compounding mixture. For example, if desired, a coupling agent can be pre-mixed with the surface treated hydrous kaolin before addition of the kaolin to the mixture. The surface treated hydrous kaolin and the polymer resin are mixed together in suitable ratios to form a blend (so-called "compounding"). In general, the polymer resin should be in a liquid form to enable the particles of the kaolin to be dispersed therein. Where the polymer resin is solid at ambient temperatures, the polymer resin may need to be melted before the compounding can be accomplished. In some embodiments, the hydrous kaolin may be dry blended with particles of the polymer resin, dispersion of the particles in the resin then being accomplished when the melt is obtained prior to forming an article from the melt, for example in an extruder itself.

In embodiments of the invention, the polymer resin and the surface treated kaolin and, if necessary, any other optional additives, may be formed into a suitable masterbatch by the use of a suitable compounder/mixer in a manner known per se, and may be pelletized, e.g. by the use of a single screw extruder or a twin-screw extruder which forms strands which may be cut or broken into pellets. The compounder may have a single inlet for introducing the filler and the polymer together. Alternatively, separate inlets may be provided for the filler and the polymer resin. Suitable compounders are available commercially, for example from Werner & Pfleiderer. High shear compounding methods are preferred in the present invention as they tend to result in better dispersion of the treated kaolins.

As will readily be understood by one of ordinary skill in this art, the polymer composition may typically be compounded with other components or additives known in the thermoplastic polymer compounding art, such as, for example, stabilisers and/or other additives which include coupling agents, acid scavengers and metal deactivators. Acid scavenger additives have the ability to neutralise acidic species in a formulation and may be used to improve the stability of the polymer film. Suitable acid scavengers include metallic stearates, hydrotalcite, hydrocalumite, zinc oxide. Suitable coupling agents include silanes. The stabilisers may be selected from thermo-oxidative stabilisers and photostabilisers. Suitable thermo-oxidative stabilisers include antioxidants and process stabilisers. Suitable photostabilisers include UV absorbers and UV stabilisers. Some UV stabilisers, such as hindered amine light stabilisers (HALS) e.g. commercially available Tinuvin 494, may also be classed as thermo-oxidative stabilisers.

The polymer compositions according to the present invention can be processed to form, or to be incorporated in, articles of commerce in any suitable way. Such processing may include compression moulding, injection moulding, gas-assisted injection moulding, calendaring, vacuum forming, thermoforming, extrusion, blow moulding, drawing, spinning, film forming, laminating or any combination thereof. Any suitable apparatus may be used, as will be apparent to one of ordinary skill in this art.

The articles which may be formed from the polymer compositions are many and varied, and include for example, articles which are suitable for use in one or more of the construction, pharmaceutical or food packaging industries. For use in the food industry the types of packaging include films, food-trays, fizzy drink containers (e.g. made from polyester based polymers), articles which are suitable for use in a microwave oven, general food packaging including packaging which is suitable for animal food. Other articles include tyres, piping such as fuel-lines and underfloor heating, and sports equipment such as tennis balls.

Methods of making polymer films are well known to those of ordinary skill in the art and may be prepared in a conventional manner. Known methods include the use of casting, extruding and blowing processes. For example, extrusion blown film lines may be used. For those instances where combinations of polymers are used, such as EVA and LDPE, then co-extrusion techniques may be used. Methods of co-extrusion are well known to the person of ordinary skill. Typically, two or more streams of molten polymer resin are joined into a single extrudate stream in such a way that the resins bond together but do not mix. Generally, a separate extruder is required for each stream and the extruders are linked so that the extrudates can flow together in an appropriate manner for the desired application. For making layered films, several extruders may be used in combination and fed together into a complex die that will merge each of the resin streams into a layered film or sandwich material.

The articles, e.g. the films made according to the present invention, may be of a size and thickness appropriate to the final application. For use as films for covering perishable goods, the median thickness of the film is about 10 to 300 µm and preferably about 50 to 200 µm.

### Examples

Embodiments of the present invention will now be described by way of example only, with reference to the following examples.

Physical properties, type and origin of all mineral products (including kaolins, talcs, micas and marble-based products) used in Examples 1 to 3 are set out in Table 1. Talc A is Finntalc MO5SL and Talc B is Microtalc IT Extra, both commercially available from Mondo. Talc C is Jetfine 3CA and Talc D is 10MOOS, both commercially available from Luzenac. Marble A is Carbital SB and Marble B is FilmLink 400 which are both commercially available from Imerys. Chalk A is Polcarb SB and is commercially available from Imerys. Mica A is TK40S and Mica B is SX300, both commercially available from Minelco. Mica C is Phlogopite mica which has been wet ground at 1000 kW h t⁻¹ grinding energy.

**Table 1**

| **Mineral** | **SA by BET m²g⁻¹)** | **Shape Factor (by Panaceal** | **Sedigraph d₅₀(µm)** | **Cilas d₅₀ (µm)** |
|---|---|---|---|---|
| Kaolin A | 12.8 | 30 | 0.4 | 1.6 |
| Kaolin B | 9.4 | 92 | 1.5 | 7.8 |
| Kaolin C | 11.3 | 60 | 1.2 | 5.0 |
| Kaolin D | 22.0 | 14 | 0.2 | 0.5 |
| Kaolin E | 34.0 | 102 | 0.08 | 0.39 |
| Kaolin F | 21.1 | 31 | 0.3 | 1.9 |
| Kaolin G | 12.0 | 26 | 1.2 | 2.1 |
| Talc A | 8.0 | - | 1.8 | - |
| Talc B | 8.6 | - | 1.7 | - |
| Talc C | 12.9 | - | 1.2 | 3.7 |
| Talc D | 5.3 | 21 | 2.9 | 8.1 |
| Marble A | 11.0 | - | 0.8 | 0.9 |
| Chalk A | 8.3 | - | 1.0 | |
| Marble B | 5.0 | - | 1.2 | |
| Mica A | 12.7 | NA | 3.3 | 39 |
| Mica B | 6.8 | NA | 4.0 | 13 |
| Mica C | 25.0 | - | 0.6 | 4.2 |

The d₅₀ (CILAS) measurements use a particle size measurement as determined by laser light particle size analysis using a CILAS (Compagnie Industrielle des Lasers) 1064 instrument. In this technique, the size of particles in powders, suspensions and emulsions may be measured using the diffraction of a laser beam, based on application of the Fraunhofer theory. The term "mean particle size" or d₅₀ CILAS used herein is the value determined in this way of the particle diameter at which there are 50% by volume of the particles which have a diameter less than the d₅₀ value. The preferred sample formulation for measurement of particle sizes using the CILAS 1064 instrument is a suspension in a liquid. The CILAS 1064 instrument normally provides particle size data to two decimal places.

### Example 1

### Barrier properties

The barrier properties of polymers loaded with treated high shape factor hydrous kaolins were tested. Unless otherwise stated, these kaolins were surface treated with AMP95 (2-amino-2-methyl-1-propanol, from Dow Chemical, which contains 95 wt% AMP and 5 wt% water). Data for uncoated kaolin is shown for the purposes of comparison. Also shown are results for kaolin treated with Armeen HT (AHT, which is octadecyl amine, obtainable from Akzo Nobel). Hammett indicators were used to determine the dosage of treatment agent necessary to adjust the surface acidity to approximately pKa = 3.3. Appropriate AMP95 dosage levels for each kaolin (and based on the dry weight of the kaolin) are summarised in Table 2. The coating levels in Table 2 are based on the total weight of the coated material.

Armeen HT dosage levels are included in Table 2 for Kaolin A and Kaolin B. Other minerals (talc, mica, marble) are included for the purposes of comparison (further details can be found in Table 1).

**Table 2**

| **Material** | **Coating** | **Coating level (wt.%)** |
|---|---|---|
| Kaolin E | AMP95 | 0.6 |
| Kaolin A | AMP95 | 0.7 |
| Kaolin C | AMP95 | 0.2 |
| Kaolin D | AMP95 | 0.2 |
| Kaolin F | AMP95 | 0.2 |
| Kaolin G | AMP95 | 0.2 |
| Kaolin B | AMP95 | 0.2 |
| Kaolin A | Armeen HT | 1.4 |
| Kaolin B | Armeen HT | 0.4 |

30 wt% masterbatches (i.e. 30 parts of coated mineral in 100 parts of coated mineral plus polymer) were prepared in LDPE homopolymer (Exxon Mobil LD100BW) and test compounds were prepared by masterbatch dilution. Antioxidant Irganox B225 was added during masterbatch and compound preparation, to obtain a final concentration of 0.1 wt.% of the antioxidant based on polymer. Masterbatching was carried out on a Baker Perkins MP2030 co-rotating twin-screw extruder. The die temperature was 180°C, the screw speed was 300 rpm, and the torque was 50%. Compounding was carried out on a Baker Perkins MP2030, at a die temperature of 180°C and a screw speed of 300 rpm at 50 % torque. The compounded material was stored at 60°C in a Conair drier. Film extrusion was carried out on a Dr. Collin blown film pilot line. The die temperature was 240° C, the screw speed was 75 rpm, the haul-off was 5.7 m min⁻¹, and the lay-flat was 225 mm. The resulting films had a thickness of about 30 µm. Films were conditioned prior to testing their oxygen transmission rate, tensile strength, Elmendorf tear strength. Details of all these tests are given under the Test Methods section.

Table 3 shows results of tensile strength testing of LDPE films containing various surface treated hydrous kaolin materials. Data for talc and mica are shown for comparison. Results are expressed in terms of film breakage value which is the force at break divided by film cross section, and the elongation at break, i.e. the length of film attained at film break expressed as a percentage of the original length. SD is the standard deviation of measurement for ten specimens.

**Table 3**

| **Mineral** | **Load (wt.%)** | **Starting Thickness (µm)** | **Break value (MPa)** | **SD** | **Elongation at Break (%)** | **SD** |
|---|---|---|---|---|---|---|
| Kaolin A - 0.7wt% AMP95 | 5 | 20.1 | 19.2 | 2.7 | 380 | 78 |
| Kaolin A - 0.7wt% AMP95 | 10 | 31.8 | 19.3 | 0.8 | 469 | 21 |
| Kaolin A - 0.7wt% AMP95 | 20 | 26.1 | 17.0 | 2.6 | 328 | 123 |
| Kaolin C - 0.2wt% AMP95 | 10 | 19.1 | 17.7 | 1.2 | 348 | 20 |
| Kaolin C - 0.2wt% AMP95 | 20 | 21.3 | 14.0 | 1.5 | 202 | 54 |
| Kaolin D - 0.2wt% AMP95 | 5 | 31.2 | 11.1 | 1.0 | 311 | 88 |
| Kaolin D - 0.2wt% AMP95 | 10 | 26.9 | 19.9 | 1.8 | 432 | 32 |
| Kaolin D - 0.2wt% AMP95 | 20 | 28.9 | 16.6 | 2.2 | 351 | 37 |
| Kaolin F - 0.2wt% AMP95 | 10 | 29.9 | 13.4 | 1.1 | 319 | 65 |
| Kaolin F - 0.2wt% AMP95 | 20 | 31.5 | 14.1 | 1.1 | 299 | 28 |
| Kaolin G - 0.2wt% AMP95 | 10 | 33.1 | 17.7 | 0.8 | 438 | 36 |
| Kaolin G - 0.2wt% AMP96 | 20 | 31.1 | 16.7 | 1.5 | 381 | 68 |
| Mica C | 10 | 18.7 | 18.0 | 2.3 | 347 | 63 |
| Mica C | 20 | 25.9 | 13.2 | 1.4 | 264 | 44 |
| Talc A | 5 | 28.7 | 15.5 | 1.7 | 359 | 67 |
| Talc A | 10 | 38.1 | 14.4 | 1.8 | 392 | 23 |
| Talc A | 20 | 22.6 | 14.8 | 1.1 | 226 | 46 |
| Talc B | 10 | 29.7 | 15.8 | 2.0 | 370 | 55 |
| Unfilled LDPE film | 0 | 26.5 | 20.0 | 3.4 | 414 | 94 |

Table 4 shows results of Elmendorf tear strength testing of 30 µm LDPE films containing various surface treated hydrous kaolin materials. Data for talc and mica are shown for comparison. Results are expressed in terms of maximum force measured divided by film thickness. SD is the standard deviation of measurement for ten specimens.

**Table 4**

| **Mineral** | **Load (wt.%)** | **Max Force/Thick (N/mm)** | **SD** |
|---|---|---|---|
| Kaolin A - 0.7wt% AMP95 | 5 | 46.2 | 6.8 |
| Kaolin A - 0.7wt% AMP95 | 10 | 39.8 | 10.3 |
| Kaolin A - 0.7wt% AMP95 | 20 | 20.3 | 5.0 |
| Kaolin C - 0.2wt% AMP95 | 10 | 37.8 | 7.8 |
| Kaolin C - 0.2wt% AMP95 | 20 | 27.3 | 10.5 |
| Kaolin D - 0.2wt% AMP95, | 5 | 33.6 | 7.4 |
| Kaolin D - 0.2wt% AMP95, | 10 | 37.9 | 11.2 |
| Kaolin D - 0.2wt% AMP95, | 20 | 20.0 | 1.0 |
| Kaolin F - 0.2wt% AMP95, | 10 | 44.7 | 10.4 |
| Kaolin F - 0.2wt% AMP95, | 20 | 16.9 | 4.7 |
| Kaolin G - 0.2wt% AMP95 | 10 | 41.2 | 9.1 |
| Kaolin G - 0.2wt% AMP95 | 20 | 22.4 | 5.4 |
| Mica C | 10 | 46.3 | 5.1 |
| Mica C | 20 | 21.4 | 6.9 |
| Talc A | 5 | 41.5 | 7.1 |
| Talc A | 10 | 44.0 | 4.5 |
| Talc A | 20 | 25.5 | 8.5 |
| Talc B | 10 | 42.3 | 5.9 |
| Unfilled LDPE film | 0 | 43.5 | 4.0 |

Table 5 shows results of oxygen barrier testing (oxygen transmission rate - OTR) of 30µm thickness LDPE films containing various surface treated hydrous kaolin materials. Data for talc and mica are shown for comparison.

**Table 5**

| **Mineral** | **(wt.%)** | **OTR (cm³ µm m⁻² day⁻¹)** |
|---|---|---|
| LDPE unfilled | 0 | 1.73E+05 |
| Kaolin A - 0.7wt% AMP95 Jet milled | 5 | 1.58E+05 |
| Kaolin D - 0.2wt% AMP95, jet milled | 5 | 1.61 E+05 |
| Talc A | 5 | 1.66E+05 |
| Kaolin A - 0.7wt% AMP95 Jet milled | 10 | 1.39E+05 |
| Kaolin A - 0.7wt% AMP95 | 10 | 1.38E+05 |
| Kaolin C - 0.2wt% AMP95 Jet milled | 10 | 1.50E+05 |
| Kaolin C - 0.2wt% AMP95 | 10 | 1.31 E+05 |
| Kaolin E - 0.6wt% AMP95, Jet milled | 10 | 1.64E+05 |
| Kaolin E - 0.6wt% AMP95 | 10 | 1.73E+05 |
| Kaolin D - 0.2wt% AMP95, jet milled | 10 | 1.56E+05 |
| Kaolin F - 0.2wt% AMP95, jet milled | 10 | 1.41 E+05 |
| Kaolin G - 0.2wt% AMP95, jet milled | 10 | 1.40E+05 |
| Mica C | 10 | 1.53E+05 |
| Talc A | 10 | 1.28E+05 |
| Talc B | 10 | 1.42E+05 |
| Kaolin A - 0.7wt% AMP95 Jet milled | 20 | 1.24E+05 |
| Kaolin C - 0.2wt% AMP95 Jet milled | 20 | 1.08E+05 |
| Kaolin E - 0.6wt% AMP95, Jet milled | 20 | 1.29E+05 |
| Kaolin D - 0.2wt% AMP95, jet milled | 20 | 1.33E+05 |
| Kaolin F - 0.2wt% AMP95, jet milled | 20 | 1.18E+05 |
| Kaolin G - 0.2wt% AMP95, jet milled | 20 | 1.09E+05 |
| Mica C | 20 | 1.16E+05 |
| Talc A | 20 | 9.88E+04 |
| Kaolin B - 0.4 wt% AHT | 5 | 1.57E+05 |
| Kaolin B - 0.4 wt% AHT | 10 | 1.45E+05 |
| Kaolin B - 0.4 wt% AHT | 15 | 1.24E+05 |
| Kaolin B - 0.2 wt% AMP95 | 10 | 1.45E+05 |
| Kaolin B (uncoated) | 10 | 1.45E+05 |
| Kaolin A (1.4 wt.% Armeen HT) | 10 | 1.46E+05 |
| Marble B | 10 | 1.68E+05 |

### Example 2

### Mechanical Properties

The mechanical properties of polymers loaded with treated high shape factor hydrous kaolins were tested. Other minerals (talc, mica, chalk and marble) were also included in this study. Physical properties of the various materials used are shown in Table 1. The kaolin-based materials were surface treated with Armeen HT (octadecylamine, from Akzo Nobel). Hammett indicators were used to determine the dosage of treatment agent necessary to adjust the surface acidity to approximately pKa = 3.3. Dosage levels are shown in Table 6.

**Table 6**

| **Mineral** | **SA bv BET (m^{2 g-1})** | **Amine Coating Level (wt.%).** |
|---|---|---|
| Kaolin B | 9.4 | 0.5 |
| Kaolin A | 12.8 | 1.4 |
| Kaolin E | 34 | 4.0 |
| Kaolin D | 22 | 0.75 |
| Kaolin D | 31 | 3.0 |

Surface treated clays and the relevant controls were made into a 40 wt.% masterbatch in polypropylene homopolymer HE125MO (Borealis) using a Baker Perkins MP2030 co-rotating twin-screw extruder with a die temperature of 180°C, screw speed of 300 rpm and torque ranging 22-35 %. Antioxidant IrganoxB225 added as 5 wt.% masterbatch to attain 0.1 wt.% based on polymer weight. These were then let down with further polymer and masterbatch (comprising the antioxidant) to the required concentrations using a Baker Perkins MP2030 operating under the same conditions as above with torque at 50 %. Test specimens were prepared using an Arburg Allrounder 320M injection moulder, with barrel temperatures of 200-230 °C, mould temperature 30 °C, injection rate 37.5 cm³ s, holding pressure 1000 bar, cooling time 25s. Test specimens were conditioned prior to testing their flexural modulus performance. Details of these procedures are given under the Test Methods section. Flexural modulus results are shown in Table 7. Stiffer polymer composites will show a higher flexural modulus.

**Table 7**

| **Mineral** | **Nominal Filler Loading (wt.%)** | **Flexural Modulus (GPa)** | **SD** |
|---|---|---|---|
| Kaolin B - 0.5 wt% AHT | 30 | 3.02 | 0.05 |
| Kaolin A -1.4 wt% AHT | 30 | 2.52 | 0.02 |
| Talc D | 30 | 3.49 | 0.13 |
| Talc C | 30 | 3.62 | 0.09 |
| Kaolin E - 4 wt% AHT | 30 | 2.22 | 0.05 |
| Kaolin D - 0.75 wt% AHT | 30 | 2.26 | 0.05 |
| Kaolin D - 3 wt% AHT | 30 | 1.94 | 0.04 |
| Mica A | 30 | 3.70 | 0.15 |
| Mica B | 30 | 2.74 | 0.09 |
| Marble A | 30 | 1.85 | 0.05 |
| Chalk A | 30 | 1.85 | 0.03 |
| Unfilled polypropylene | 0 | 1.28 | 0.03 |

### Example 3

### Surface Treatment

Physical properties of the kaolins tested for this surface treatment experiment are set out in Table 1.

The surface treatment agents tested in the examples are all commercially available. Details of the various surface treatment agents used in this Example are summarised in Table 8.

**Table 8**

| **Compound type** | **Trade Name** | **Source** | **Chemical name** |
|---|---|---|---|
| Primary amine | Armeen HT | Akzo Nobel | Octadecylamine |
| Secondary amine | Armeen 2HT | Akzo Nobel | Di(octadecyl)amine |
| Tertiary amine | Armeen M2HT | Akzo Nobel | Di(octadecyl)methylamine |
| Quaternary amine | Arquad2HT-75 | Akzo Nobel | Di(octadecyl)dimethylammonium hydrochloride 75% (25% propan-2-ol) |
| Di-amine | Duomeen T | Akzo Nobel | N-(octadecyl)-1,3-diaminopropane |
| Tri-amine | Triameen YT | Akzo Nobel | N-(3-aminopropyl)-N-octadecyltrimethylene diamine |
| Poly-amine | HEPA | DelAmine | Pentaethylenehexamine + Hexaethyleneheptamine |
| Amino silane | Silquest A1100 | GE Silicones | γ-Aminopropyl triethoxysilane |
| Amino alcohol | AMP95 | Dow Chemical | 2-amino-2-methyl-1-propanol |

The optimal dose rate (based on the weight of the dry kaolin) was obtained for a range of different amines with Kaolin A, by the use of Hammett indicators in order to determine the dosage of treatment agent necessary to adjust the surface acidity to approximately pKa = 3.3. The dosage required is presented in Table 9.

**Table 9**

| **Surface treatment agent** | **Dose required/wt.%** |
|---|---|
| Armeen HT | 1.4 |
| Armeen 2HT | 2.5 |
| Armeen M2HT | 2.5 |
| Arquad2HT-75 | 6.0 |
| Duomeen T | 0.7 |
| Triameen YT | 1.0 |
| HEPA | 0.9 |
| Silquest | 1.6 |
| AMP95 | 0.7 |

### Polymer test samples

A series of 30 wt.% masterbatch samples of polypropylene homopolymer (Borealis HE125MO) with 0.1 wt.% (based on polymer weight) antioxidant Irganox B225 and coated Kaolin A were prepared by masterbatch dilution. The samples were dried overnight before injection moulding into test pieces. Masterbatching was carried out on a Baker Perkins MP2030 co-rotating twin-screw extruder at a die temperature of 180°C, a screw speed of 300 rpm, and a torque ranging of 22-35% (depending on the mineral present). Compounding was carried out on a Baker Perkins MP2030 extruder at a die temperature of 180°C, a screw speed of 300 rpm, and a 50 % torque. Injection moulding was carried out on an Arburg Allrounder 320M injection moulder, with barrel temperatures of 200-230 °C, a mould temperature of 30°C, an injection rate of 37.5 cm³ s⁻¹, and a cooling time of 25 s. Details relating to the testing procedures are set out under Test Methods. Table 10 contains data illustrating the degradation, or Long Term Thermal Stability (LTTS) which is expressed as the % original Flexural Modulus @ 96 hours, of loaded polymer samples which have been treated with Armeen HT at different dosages. The results were normalised against the natural increase in flexural modulus for unfilled polypropylene due to polymer chain relaxation and reorientation at 130°C. A number of talc samples are also present for the purposes of comparison: (details of source and properties are shown in Table 1).

**Table 10**

| **Treatment of Kaolin A (wt%)** | **% original Flexural Modulus (FM) @ 96 hours (+/-10%)** |
|---|---|
| Armeen HT 0.2wt% | 5 |
| ArmeenHT 0.6wt% | 17 |
| Armeen HT1.0wt% | 54 |
| Armeen HT 1.4wt% | 40 |
| Armeen HT 2.0wt% | 27 |
| No treatment | 6 |

| Controls | |
|---|---|
| Talc C | 59 |
| Talc D | 54 |
| Unfilled | 100 |

Table 11 provides mechanical data for Kaolin A filled polypropylene samples. The surface treatment agents used and dosage details are set out in Table 9. A number of talcs are also included for the purposes of comparison.

**Table 11**

| **AmineTreatment** | **Tensile Stressat Yield (MPa)** | **Elongation atBreak (%)** | **Flexural Modulus (GPa)** | **Charpy impact Strength (kJ/ m²)** |
|---|---|---|---|---|
| No treatment | | | | |
| Armeen HT | 29.7 ± 0.2 | 14.7 ± 6.6 | 2.42 ± 0.06 | 39±5 |
| Armeen 2HT | 29.3 ± 0.2 | 10.6 ± 1.2 | 2.04 ± 0.19 | 46 ± 2 |
| Armeen M2HT | 28.8 ± 0.1 | 19.4 ± 7.9 | 2.02 ± 0.03 | 45 ± 6 |
| Arquad2HT-75 | 28.4 ± 0.2 | 18.7 ± 6.0 | 2.08 ± 0.12 | 37 ± 2 |
| Duomeen T | 31.1 ± 0.2 | 7.6 ± 1.0 | 2.46 ± 0.06 | 28 ± 2 |
| Triameen YT | 30.2 ± 0.3 | 8.7 ± 1.7 | 2.36 ± 0.05 | 33 ± 3 |
| HEPA | 32.3 ± 0.1 | 5.6 ± 1.0 | 2.82 ± 0.08 | 25 ± 3 |
| Silquest | 35.3 ± 0.1 | 8.8 ± 2.1 | 2.50 ± 0.16 | 36 ± 4 |
| AMP95 | 28.2 ± 0.2 | 44.7 ± 20 | 2.41 ± 0.03 | 40 ± 5 |

| Controls | | | | |
|---|---|---|---|---|
| Talc D | 36.7 ± 0.2 | 9.1 ± 2.1 | 3.15 ± 0.16 | 24 ± 6 |
| Talc C | 36.7 ± 0.5 | 5.4 ± 1.0 | 3.23 ± 0.15 | 19±1 |
| Unfilled PP | 34.7 ± 0.3 | 29.8 ± 13.9 | 1.24 ± 0.05 | 72 ± 8 |

Table 12 provides mechanical data for Kaolin A filled polypropylene samples. The surface treatment agents used and dosage details are set out in Table 9. A number of talcs are also included for the purposes of comparison.

**Table 12**

| **Amine Treatment** | **% original Flexural modulus (FM) @96 hours (+/- 10%)** |
|---|---|
| No treatment | 6 |
| Armeen HT | 54 |
| Armeen 2HT | 105 |
| Armeen M2HT | 54 |
| Arquad2HT-75 | 18 |
| Duomeen T | 31 |
| Triameen YT | 23 |
| HEPA | 25 |
| Silquest | 58 |
| AMP95 | 55 |

| Controls | |
|---|---|
| Talc D | 59 |
| Talc C | 54 |
| Unfilled PP | 100 |

The effect of using a further treatment agent or a secondary passivant on the polypropylene samples was investigated. The compounds in Table 13 were used as further treatment agents or secondary passivants in combination with Armeen HT (AHT) and the results are presented in Table 14.

**Table 13**

| **Secondary passivant** | **Source** | **Description** |
|---|---|---|
| Irganox 1010 | Ciba Specialty Chemicals | phenol-based antioxidant |
| DER 330 | DOW Chemical | low m.w. epoxy resin |
| Irgastab CA100 | Ciba Specialty Chemicals | medium m.w. epoxy resin |
| Tetra-sodium pyrophosphate (TSPP) | BDH | inorganic kaolin dispersant |
| Acusol 460N | Rohm & Haas | hydrophobically modified polyacrylate |
| Prime MP4990R | Michelman | ethylene copolymer of polyacrylic acid |
| Silquest A137 | GE Silicones | Octyltriethoxysilane |

**Table 14**

| **Treatment agents** | **Dose (wt %) of secondary passivant** | **% Flex Modulus remaining @ 96h (+/-10%)** |
|---|---|---|
| Armeen HT (AHT) | - | 54 |
| AHT/Ciba Irganox 1010 | 0.3 | 65 |
| AHT/Dow DER 330 | 1.0 | 104 |
| AHT/Ciba Irgastab CA100 | 1.0 | 61 |
| AHT/Tetra-sodium polyphosphate (TSPP) | 0.5 | 71 |
| AHT/Rohm & Haas Acusol 460N | 1.0 | 55 |
| AHT/Michelman Prime MP4990R | 1.0 | 52 |
| AHT/GE Silicones Silquest A137 | 1.0 | 49 |

### Test Methods

### Conditioning

Conditioning of filled polymer samples was carried out according to ISO 291. The samples were conditioned at 23°C and 50 % relative humidity (RH) for a minimum of 48 hours (Examples 1 and 2) or 96 hours prior to testing.

### Colour

Colour was measured with a CIELab. The primary illuminant used was a 6500K illumination with an observation angle of 10° and the UV and surface components were excluded.

### Tensile Strength

Tensile strength was measured according to ISO 527-2 with a head speed of 50mm min⁻¹. The polymer specimens were 10mm wide and 4mm thick.

### Flexural modulus

Flexural modulus experiments were carried out according to ISO 178 with a head speed of 2 mm min⁻¹ and using a 50 kg load cell. The support separation was 60 mm. The polymer specimens were 10 mm wide and 4 mm thick.

### Charpy IS

Impact Toughness was measured according to the Charpy test as set out in ISO 179. 1eU, support separation 60 mm, 7.5 J impact energy, 10 specimens (type 1, 80 mm x 4 mm x 10 mm).

### Tensile strength (film)

The tensile strength of the polymer films was measured according to ASTM D882-91. Specimens (10 for each formulation) were cut in the direction of film extrusion (machine direction), 25 mm width, 100 mm length. The test was conducted at a cross-head speed of 1000 mm min⁻¹.

### Elmendorf tear strength (film)

The Elmendorf tear strength was measured according to ASTM D1922-49. Specimens (10 for each formulation) were cut in the direction of film extrusion (machine direction).

### Oxygen permeability

The oxygen permeability (also referred to as oxygen transmission rate) of these films was measured following standard ASTM D3985, at conditions of 23°C and 50 % relative humidity using Mocon Instrument Oxtran 2/20. The area of the film measured is about 50 cm². Samples were tested with 1 % oxygen, and results quoted to 100 % oxygen. Each material was measured in duplicate using two specimens. Permeability results are quoted as volume of oxygen at 23°C and 1 bar transmitted through 1 m² of film in 24 hours and multiplied by the film thickness in micrometer, with units of Cm³ µm m⁻² day⁻¹.

### Long Term Thermal Stability (LTTS)

LTTS (which may also be referred to as degradation) was measured as a percentage loss of flexural modulus compared with an unaged sample. Aging was for 96 hours at 130°C.

### Falling Weight IS

Falling weight measurements were made according to ISO 6603-2, 25 kg falling weight, 4.4 m s⁻¹ falling speed at impact, 23°C (square plaque, 4 mm thickness).

For the avoidance of doubt, the present application extends to the subject-matter in the following numbered paragraphs
1. A barrier composition comprising a surface treated high shape factor hydrous kaolin, wherein said kaolin decreases the oxygen transmission rate (OTR) of the barrier composition compared to the barrier composition in the absence of said kaolin.
2. A barrier composition according to paragraph 1, wherein the shape factor is equal to or greater than 20.
3. A barrier composition according to paragraph 1, wherein the shape factor is equal to or greater than 25.
4. A barrier composition according to paragraph 1, wherein the shape factor is equal to or greater than 30.
5. A barrier composition according to paragraph 1, wherein the shape factor is equal to or greater than 35.
6. A barrier composition according to paragraph 1, wherein the shape factor is equal to or greater than 40.
7. A barrier composition according to paragraph 1, wherein the shape factor is equal to or greater than 50.
8. A barrier composition according to paragraph 1, wherein the shape factor is equal to or greater than 90.
9. A barrier composition according to paragraph 1, wherein the shape factor is in the range 20 to 150.
10. A barrier composition according to any one of the preceding paragraphs wherein the oxygen transmission rate (OTR) is decreased by at least 1%.
11. A barrier composition according to the previous paragraph, wherein the OTR is decreased by at least 5%.
12. A barrier composition according to the previous paragraph wherein the OTR is decreased by at least 10%.
13. A barrier composition according to the previous paragraph wherein the OTR is decreased by at least 20%.
14. A barrier composition according to the previous paragraph wherein the OTR is decreased by at least 30%.
15. A barrier composition according to any one of the preceding paragraphs wherein the d₅₀ of the hydrous kaolin is less than or equal to about 2µm.
16. A barrier composition according to the previous paragraph, wherein the d₅₀ is less than 1.5µm.
17. A barrier composition according to the previous paragraph, wherein the d₅₀ is less than 1 µm.
18. A barrier composition according to the previous paragraph wherein the d₅₀ is less than about 0.5µm.
19. A barrier composition according to the previous paragraph, wherein the d₅₀ is less than about 0.3µm.
20. A barrier composition according to any one of paragraphs 1 to 14, wherein the d₅₀ lies in the range of about 0.3µm to about 2µm.
21. A barrier composition according to any one of the preceding paragraphs wherein the surface treatment of the high shape factor hydrous kaolin comprises the use of one or more organic compounds.
22. A composition according to the previous paragraph, wherein the one or more organic compounds comprise an organic portion and a basic portion.
23. A composition according to the previous paragraph, wherein the organic portion comprises or consists essentially of a straight or branched chain alkyl group having at least 3 carbon atoms.
24. A composition according to the previous paragraph wherein the straight or branched chain alkyl group has between 8 and 24 carbon atoms.
25. A composition according to paragraph 22, wherein the organic portion may comprise or consist essentially of one or more cyclic organic groups, which may be saturated, unsaturated or aromatic, and may optionally include one or more heteroatoms, for example selected from O, N, S, Si.
26. A composition according to paragraph 21, wherein the organic compound is selected from one or more saturated or unsaturated C₃-C₂₄ fatty acids, preferably C₂₂ or C₂₄ fatty acids.
27. A composition according to any one of paragraphs 22 to 26, wherein the basic portion comprises any group which is capable of associating with the acid sites of the hydrous kaolin particles.
28. A composition according to the previous paragraph wherein the basic portion includes at least one primary, secondary or tertiary amine group.
29. A composition according to paragraph 21, wherein the organic compound is selected from an alkyl mono-amine containing between 8 and 24 carbon atoms in a straight or branched alkyl portion, organic polyamines, and cyclic mono- or poly-amines including at least one cyclic ring system having at least 6 atoms comprising the ring.
30. A composition according to paragraph 21, wherein the organic compound is 2-amino-2-methyl-1-propanol.
31. A composition according to paragraph 21, wherein the organic compound is given by the Formula I:

   R-NR₁R₂ (I)

   wherein R may be selected from C₈-C₂₄ straight or branched chain alkyl groups and R₁ and R₂ may, independently of one another be selected from H, C₈ - C₂₄ straight or branched chain alkyl groups.
32. A composition according to the previous paragraph wherein at least one of R₁ and R₂ is selected from H.
33. A composition according to any one of paragraphs 1 to 20, wherein the surface treatment comprises the use of one or more inorganic compounds.
34. A composition according to the previous paragraph wherein the one or more inorganic compounds are selected from silicon containing compounds such as silanes, amino silanes and silicates.
35. A composition according to the previous paragraph, wherein the one or more inorganic compounds are selected from trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine.
36. A composition according to paragraph 33, wherein the one or more inorganic compounds are selected from inorganic phosphate dispersants and sulphate based compounds.
37. A composition according to any one of the previous paragraphs, wherein the kaolin has been subjected to secondary treatment.
38. A composition according to the previous paragraph, wherein the secondary treatment comprises the use of one or more of the following: antioxidants such as phenol based antioxidants; resins such as low or medium weight epoxy resins; dispersants such as kaolin dispersants; polymers such as polyacrylates which have been hydrophobically modified; copolymers such as ethylene copolymers of polacrylic acid, silicon containing compounds such as silanes, amino silanes and silicates.
39. A barrier composition according to any one of the preceding paragraphs wherein the composition is a barrier coating for substrates.
40. A barrier composition according to the previous paragraph wherein the substrate is a paper product.
41. A barrier composition according to the previous paragraph wherein the composition further comprises a binder and optionally one or more of the following: dispersants; cross linkers; water retention aids; viscosity modifiers or thickeners; lubricity or calendering aids; antifoamers/defoamers; gloss-ink hold-out additives; dry or wet rub improvement or abrasion resistance additives; dry or wet pick improvement additives; optical brightening agents or fluorescent whitening agents; dyes; biocides; levelling or evening aids; grease or oil resistance additives; water resistance additives and/or insolubilisers.
42. A barrier composition according to the previous paragraph wherein the binder is selected from: adhesives derived from natural starch obtained from a known plant source, for example, wheat, maize, potato or tapioca; synthetic binders, including styrene butadiene, acrylic latex, vinyl acetate latex, or styrene acrylic; casein; polyvinyl alcohol; polyvinyl acetate; or mixtures thereof.
43. A barrier composition according to paragraph 39, wherein the substrate is a polymer.
44. A barrier composition according to paragraph 43, wherein the polymer is selected from polyolefins of any density such as polyethylene and polypropylene, polycarbonate, polystyrene, polyester, acrylonitrile-butadiene-styrene copolymer, nylons, polyurethane, ethylene-vinylacetate polymers, ethylene vinyl alcohol, polyvinylidene chloride, polyethylene terephthalate, natural or synthetic rubbers and any mixture thereof, whether cross-linked or un-cross-linked.
45. A barrier composition according to any one of paragraphs 1 to 38, wherein the composition is a polymer composition comprising at least one polymer.
46. A barrier composition according to the previous paragraph wherein the at least one polymer is selected from polyolefins of any density such as polyethylene and polypropylene, polycarbonate, polystyrene, polyester, acrylonitrile-butadiene-styrene copolymer, nylons, polyurethane, ethylene-vinylacetate polymers, ethylene vinyl alcohol, polyvinylidene chloride, polyethylene terephthalate, natural or synthetic rubbers and any mixture thereof, whether cross-linked or un-cross-linked.
47. A barrier composition according to paragraph 45 or 46, wherein the polymer is a thermoplastic polymer suitable for making polymer films.
48. A composition according to paragraph 47, wherein the polymer is a polyolefin.
49. A composition according to the previous paragraph wherein the polyolefin is polyethylene or polypropylene.
50. A polymer article formed or formable from the composition according to any one of paragraphs 45 to 49.
51. A polymer article according to the previous paragraph wherein the article is a polymer film.
52. A polymer article according to paragraph 50 or 51, wherein the article is in the form of packaging.
53. A packaged product, wherein the product is packaged in the polymer article according to paragraph 52.
54. A packaged product according to the previous paragraph, wherein the product is selected from perishable goods, foods and beverages, health care products, electrical goods, electronic components, pharmaceuticals.
55. The use of a surface treated high shape factor hydrous kaolin in a barrier composition for decreasing the oxygen transmission rate (OTR) of said composition when compared to the composition in the absence of the surface treated high shape factor hydrous kaolin.
56. The use according to the previous paragraph, wherein the shape factor is equal to or greater than 20.
57. The use according to paragraph 55, wherein the shape factor is equal to or greater than 25.
58. The use according to paragraph 55, wherein the shape factor is equal to or greater than 30.
59. The use according to paragraph 55, wherein the shape factor is equal to or greater than 35.
60. The use according to paragraph 55, wherein the shape factor is equal to or greater than 40.
61. The use according to paragraph 55, wherein the shape factor is equal to or greater than 50.
62. The use according to paragraph 55, wherein the shape factor is equal to or greater than 90.
63. The use according to paragraph 55, wherein the shape factor is in the range 20 to 150.
64. The use according to any one of paragraphs 55 to 63, wherein the oxygen transmission rate (OTR) is decreased by at least 1%.
65. The use according to any one of paragraphs 55 to 63, wherein the oxygen transmission rate (OTR) is decreased by at least 5%.
66. The use according to any one of paragraphs 55 to 63, wherein the oxygen transmission rate (OTR) is decreased by at least 10%.
67. The use according to any one of paragraphs 55 to 63, wherein the oxygen transmission rate (OTR) is decreased by at least 20%.
68. The use according to any one of paragraphs 55 to 63, wherein the oxygen transmission rate (OTR) is decreased by at least 30%.

## Claims

1. A barrier composition comprising a surface treated high shape factor hydrous kaolin, wherein said kaolin decreases the oxygen transmission rate (OTR) of the barrier composition compared to the barrier composition in the absence of said kaolin, wherein the shape factor is equal to or greater than 20.

2. A barrier composition according to claim 1, wherein the shape factor is equal to or greater than 40.

3. A barrier composition according to claim 1, wherein the shape factor is equal to or greater than 50.

4. A barrier composition according to claim 1, wherein the shape factor is equal to or greater than 90.

5. A barrier composition according to any one of the preceding claims wherein the oxygen transmission rate (OTR) is decreased by at least 1 %.

6. A barrier composition according to the previous claim, wherein the OTR is decreased by at least 5%.

7. A barrier composition according to any one of the preceding claims wherein the d50 of the hydrous kaolin is less than or equal to about 2 µm.

8. A barrier composition according to any one of claims 1 to 7, wherein the surface treatment comprises the use of one or more inorganic compounds.

9. A barrier composition according to the previous claim wherein the one or more inorganic compounds are selected from silicon containing compounds such as silanes, amino silanes and silicates.

10. A barrier composition according to claim 8 or 9, wherein the one or more inorganic compounds are selected from trimethoxysilyl ethyl amine, triethoxysilyl ethyl amine, tripropoxysilyl ethyl amine, tributoxysilyl ethyl amine, trimethoxysilyl propyl amine, triethoxysilyl propyl amine, tripropoxysilyl propyl amine, triisopropoxysilyl propyl amine, tributoxysilyl propyl amine, trimethoxysilyl butyl amine, triethoxysilyl butyl amine, tripropoxysilyl butyl amine, tributoxysilyl butyl amine, trimethoxysilyl pentyl amine, triethoxysilyl pentyl amine, tripropoxysilyl pentyl amine, tributoxysilyl pentyl amine, trimethoxysilyl hexyl amine, triethoxysilyl hexyl amine, tripropoxysilyl hexyl amine, tributoxysilyl hexyl amine, trimethoxysilyl heptyl amine, triethoxysilyl heptyl amine, tripropoxysilyl heptyl amine, tributoxysilyl heptyl amine, trimethoxysilyl octyl amine, triethoxysilyl octyl amine, tripropoxysilyl octyl amine, tributoxysilyl octyl amine.

11. A barrier composition according to claim 8, wherein the one or more inorganic compounds are selected from inorganic phosphate dispersants and sulphate based compounds.

12. A barrier composition according to any one of the previous claims, wherein the kaolin has been subjected to secondary treatment.

13. A barrier composition according to the previous claim, wherein the secondary treatment comprises the use of one or more of the following: antioxidants such as phenol based antioxidants; resins such as low or medium weight epoxy resins; dispersants such as kaolin dispersants; polymers such as polyacrylates which have been hydrophobically modified; copolymers such as ethylene copolymers of polacrylic acid, silicon containing compounds such as silanes, amino silanes and silicates.

14. A barrier composition according to any one of the previous claims wherein the composition is a barrier coating for a paper product.

15. The use of a surface treated high shape factor hydrous kaolin in a barrier composition for decreasing the oxygen transmission rate (OTR) of said composition when compared to the composition in the absence of the surface treated high shape factor hydrous kaolin, wherein the shape factor is equal to or greater than 20.
